# EUROPEAN PATENT APPLICATION

(11) **EP 2 048 114 A2**
(43) Date of publication of application: **15.04.2009**
(21) Application number: 08017235.6
(22) Date of filing: 30.09.2008
(51) Int. Cl.: C01B 31/02, B01D 21/00

(54) **Thermophoretic fractionalization of small particles**

(30) Priority: 09.10.2007 US 973568
(71) Applicant: Furukawa Electric North America Inc. (a Delaware Corporation), Norcross GA 30071 (US)
(72) Inventor: DiGiovanni, David J., Mountain Lakes, NJ 07046 (US); Nicholson, Jeffrey, Morristown, NJ 07960 (US)
(74) Representative: Stöckeler, Ferdinand

(57) **Abstract**

Described is a method for fractionalizing nanoparticles according to the conductivity of the particle, thus enabling the production of large numbers of particles with uniform conductivity. The method is based on a modified thermophoresis process wherein a temperature gradient is produced in a mixture of particles and the most conductive particles are selectively deposited on a warm surface. In contrast to conventional thermophoresis methods, the temperature gradient that drives the fractionalization process is produced using a light source.

## Description

### Related Applications

This application is related to application Serial No. 11/589012, filed October 27, 2006, which in its entirety is incorporated herein by reference.

### Field of the Invention

The invention relates to fractionalizing small solid conducting or semiconducting nanoparticles, according to the conductivity of the particles, using a modified thermophoresis technique.

### Background of the Invention

The effects of various fields, e.g., electrical, magnetic, thermal, on small particles have been studied extensively. One of the least understood of these is the effect of thermal gradients on particles in a liquid. This effect is usually referred to as thermophoresis. It is known that in a liquid suspension of particles, the particles may move controllably if a thermal gradient is created in the liquid. Variables in this process are very complex, and include inter alia, the thermal gradient, several properties of the particles, the nature of the liquid, i.e., viscosity and ionic strength of the liquid, dynamic fluid properties of the liquid such as fluid flow, convection flow, changes in viscosity on heating, the nature of the surfaces of the liquid container, gravitational field, etc. Because of the complexity of this process, predictability of particle behavior in a given untested system is virtually non-existent. For a detailed analysis of some of these variables, see Shiundo et al., "Retention behavior of metal particle dispersions in aqueous and non-aqueous carriers in thermal field-flow fractionization", Journal of Chromatography A, 983 (2003) 163-176. The thermal gradient in these processes is produced between a heated surface or container wall and a cooled surface or container wall.

While the invention is directed to fractionalization of nanoparticles generally, of particular interest is the fractionalization of carbon nanotubes. Studies have shown that carbon nanotubes, typically single-walled carbon nanotubes (SWNTs), when produced by conventional methods, have a wide variation in properties. In particular, the electrical conductivity of mixtures of carbon nanotubes varies considerably to very conductive, comparable to typical metal conductors, to semiconductive. For some applications it is desirable for the nanotubes to have uniform conductivity, either uniformly conductive or uniformly semiconductive. At present, the variation in nanotube conductivity has not been appreciated to the point where effective techniques are available for producing nanotubes with uniform conductivity.

### Brief Statement of the Invention

We have discovered a method for fractionalizing small particles according to the conductivity of the particle, thus enabling the production of large numbers of particles with uniform conductivity. The method is based on a modified thermophoresis process wherein a temperature gradient is produced in a mixture of particles and the most conductive particles are selectively deposited on a warm surface. In contrast to conventional thermophoresis methods, the temperature gradient that drives the fractionalization process is produced using a light source.

### Brief Description of the Drawing

The invention may be more easily understood when considered with the drawing, wherein:
Figs. 1 and 2 are schematic representations of a prior art method for fractionating particles;
Figs. 3 and 4 are schematic representations of carbon nanotubes selectively deposited on a collection plate by the method of the invention; and
Fig. 5 is a schematic representation of one method of harvesting the collected nanotubes.

### Detailed Description

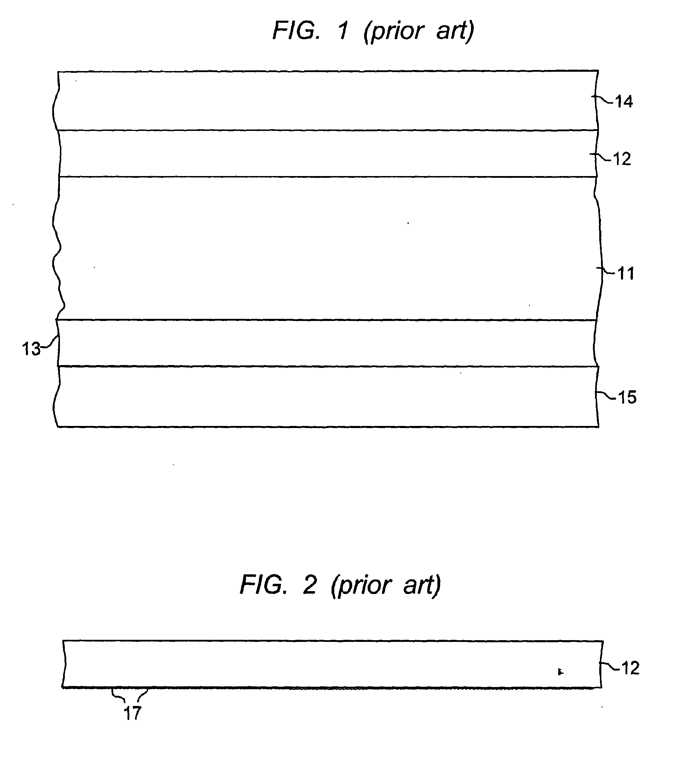

With reference to Fig. 1, a conventional thermophoresis method is illustrated, for comparison to the method of the invention. In Fig. 1, a solution 11 is shown, which consists of a carrier liquid and particles. The particles are typically polymer, glass, e.g. silica, or one of a wide variety of particles and mixtures of particles processed by known thermophoresis methods. The solution is contained between container walls; a cool wall 12, cooled by cooling means represented by 13, and a warm wall 13, cooled by cooling means represented by element 15. When a temperature gradient is formed in the liquid adjacent to the cool wall 12, particles from the liquid carrier 11 may deposit on the surface of the cool wall. This is illustrated in Fig. 2, where particles 17 adhere to the surface of element 12.

A modified thermophoresis process is employed for the fractionalization method of the invention. It was discovered that an effective gradient for thermophoresis of nanoparticles is created using light. The effect is not thoroughly understood, but likely involves a complex heating mechanism including primary heating of the particles through absorption of light energy directly by the particles, and secondary heating of the liquid.

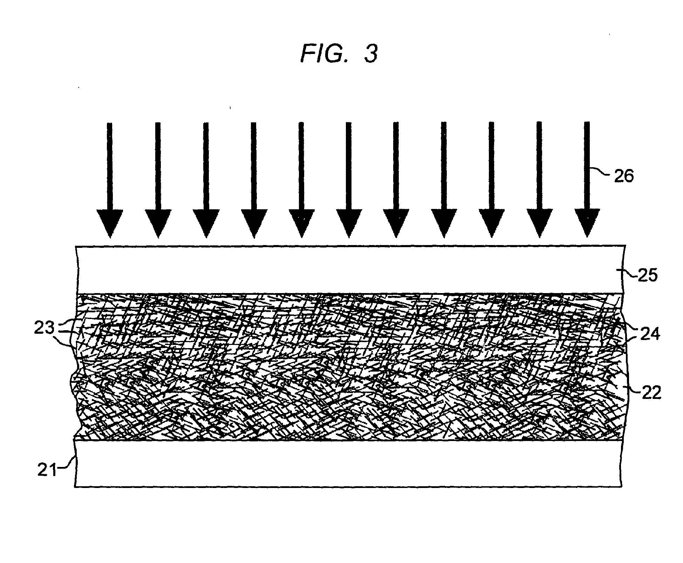

Fig. 3 shows an apparatus for particle fractionalization according to the invention. The detailed description of the invention, and a preferred embodiment of the invention, involves a method wherein the particles being fractionalized are carbon nanotubes.

Referring to Fig. 3, a suspension of carbon nanotubes is shown generally at 22. For simplicity, the nanotubes are shown as straight tubes but are more typically curved. The suspension carbon nanotubes comprises conductive nanotubes, indicated at 23, and less conductive nanotubes, typically semiconductive nanotubes, indicated at 24. The conductive nanotubes are lighter in shade than the semiconductive nanotubes. While the illustration shows two distinct categories of nanotubes, conductive and semiconductive, the illustration and this description show these in this manner for convenience and simplicity in the description. It will be appreciated that a typical mixture of carbon nanotubes, manufactured by conventional production methods, will comprise nanotubes having a continuum of conductivities. The fractionalization method of the invention is intended to separate a fraction of nanotubes having a range of relatively high conductivities from a fraction with a range of relatively lower conductivities.

Referring again to Fig. 3, in this sectional view the suspension of nanotubes is contained by surfaces 21 and 25. The figure is not to scale. The distance between elements 21 and 25 may be small or large, and elements 21 and 25 may be portions of a larger container, or portions of a tube, e.g. a capillary tube. Element 25 represents the deposition substrate. It may be part of the container for the liquid suspension, or may be a plate immersed in the liquid suspension. Any suitable container for the suspension may be used. There are no strict constraints on the construction and geometry of the apparatus shown in Fig. 3, except that deposition substrate 25 is preferably transparent. The temperature gradient that drives the fractionalization process is produced by a light source, indicated schematically at 26. The light source is incident on deposition substrate 25, and light from the light source is projected through the deposition substrate and into suspension 24. The wavelength and intensity of the light source may be chosen depending on the particles being fractionalized, the liquid carrier, and the geometry of the apparatus.

The method of the invention was demonstrated with light projecting through the surface on which the particles deposit. Accordingly, in the preferred embodiment of the invention the substrate has a front side, where deposition of particles occurs, and a back side, which is illuminated with light. However, other arrangements may produce an essentially equivalent result, i.e. selective deposition of conductive particles on the deposition substrate. If the space between the walls is small, the particles may see both walls as cool walls, and deposit on either wall or both walls. Light may be projected through both sides is desired. In the case of a capillary tube as the deposition substrate, light may be projected on one side or more than one side, and particles may caused to deposit on all inside surfaces of the tube.

Carbon nanotubes useful in the fractionalization methods of the invention may be prepared by a laser ablation method in which high energy laser pulses from a Nd:YAG laser are used to ablate a metal catalyzed carbon target placed in a quartz tube filled with 500 Torr of Argon gas. The quartz tube is heated in an electric furnace. With the aid of catalysts SWNTs with a diameter of approximately 1 nm may be grown. A variety of alternative techniques for preparing SWNTs are available. The method for preparing the SWNTs forms no part of the invention. The physical size of carbon nanotubes is generally classified in terms of the diameter of the nanotubes. These range from a fraction of a nanometer to 10² nm, but typically 1-5 nm. The length of the nanometers varies widely, for example, from 10² to 10³ times the diameter of the nanotubes. These size ranges provides a benchmark for the nature of particles that may be processed by the method of the invention.

The electrical conductivity of typical carbon nanotubes ranges from very conductive, i.e. comparable to copper (∼1.6 microohm-cm), to semiconductive, comparable to intrinsic silicon (30 kohm-com). The thermal conductivity of carbon nanotubes is very high. Both properties are very axial assymetric, with both conductivities much higher along the axis of the nanotube than normal to it.

The carbon nanotubes are dispersed in a liquid carrier solution. The carrier liquid for the dispersion may be any of a variety of liquids, for example, water, alcohols, ethers, ketones, etc. Volatile liquids may be preferred for ease in drying. Non-aqueous carrier liquids are preferred. In the fractionalization method, conductive particles are selectively deposited from the liquid suspension onto the surface of a transparent deposition substrate while that surface is illuminated through the transparent deposition substrate. The suspension may be applied to a transparent deposition substrate surface by spraying or flowing the liquid carrier over the deposition substrate surface, while light is projected through the back side of the deposition substrate. With the deposition substrate surface and the liquid suspension in mutual contact, light is projected through the backside of the deposition substrate as shown in Fig. 3.

The method of the invention was demonstrated with light projecting through the surface on which the particles deposit. Accordingly, in the preferred embodiment of the invention the substrate has a front side, where deposition of particles is to occur, and a back side, which is illuminated with light. However, other arrangements may produce an essentially equivalent result, i.e. selective deposition of conductive particles on the deposition substrate.

An example of the method follows.

Approximately .001 grams of carbon nanotubes per cc of ethanol, were ultrasonically dispersed to form a liquid suspension. A surface of a transparent deposition substrate, for example 25 in Fig. 3, is immersed in the suspension and illuminated with light with a wavelength of 980 nm. The wavelength of the light may be any wavelength for which the particles being deposited have a significant absorption band. The 980 nm light may be produced conveniently using a diode laser. Conductive carbon nanotubes are selectively drawn to the surface of the deposition substrate 15, where they collect and adhere.

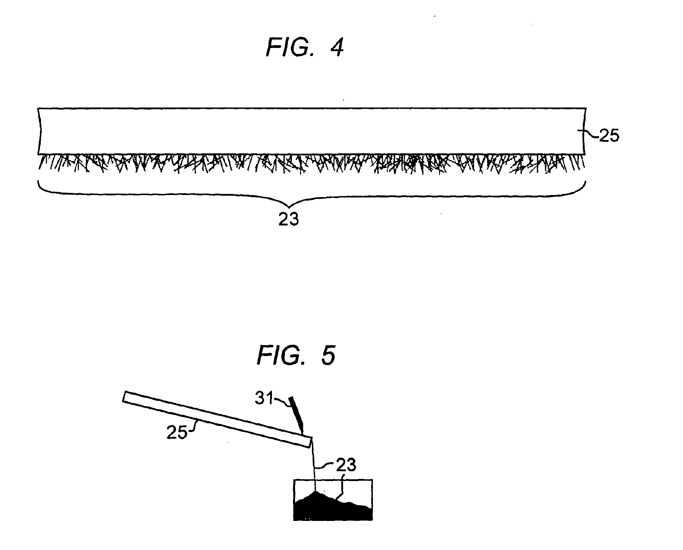

The deposition substrate was removed from the liquid suspension and dried in air. On inspection the deposition substrate appeared as shown in Fig. 4, with conductive carbon nanotubes 23 selectively deposited on the surface of substrate 25.

Multiple dipping or multiple coatings with the dispersion solution can form thicker layers of carbon nanotubes. In some circumstances, it will be desirable to form a thick layer of particles before moving on the particle harvesting step.

The particles may be harvested using a variety of methods. A suitable method is represented by Fig. 5, where particles 23 adhering to substrate 25 are scraped from the substrate, using scraper 31, and collected in a container as shown. Other methods, such as using high-pressure spray, or solvents, may be used to dislodge the particles from the deposition substrate.

The step of harvesting the particles, i.e. removing the particles from the deposition surface should be regarded as an optional step in the method since situations may arise in which the object of the method is to coat the deposition surface permanently.

In summary, the method of the invention involves the following steps: preparing a liquid suspension comprising conductive particles and less conductive particles, contacting a solid deposition surface with the liquid suspension, passing light through the solid deposition surface to selectively deposit conductive particles on the deposition surface, separating the liquid suspension and the deposition surface, drying the deposition surface, and optionally removing the conductive particles from the deposition surface. It will be understood that the steps of contacting a solid deposition surface with the liquid suspension includes the various methods described earlier. For example, depositing the particles on one or more surfaces of a container containing the liquid suspension; flowing the liquid suspension through a tube or conduit and depositing particles on the tube wall, immersing a substrate into the liquid suspension, etc.

The step of passing light through the surface of the deposition surface means either passing light towards the liquid suspension, or through the liquid suspension. As indicated earlier, the former is preferred. The wavelength of the light may be any wavelength for which the particles being deposited have a significant absorption band. The light source may be selected from a variety of devices, including lamps, LEDs, lasers.

In the example of the method described above, the conductive particles are deposited on the deposition substrate and the conductive particles are the particles selected either to be harvested from the deposition surface or to coat the deposition surface. However, applications may arise wherein the non-conductive particles are the desired species. In this case the harvesting step will be to harvest the non-conductive particles from the solution after the conductive particles have been selectively removed from the solution by the method described.

In the foregoing description, the particles that deposit on the deposition substrate are the conductive particles. Methods may be devised wherein the non-conductive particles selectively deposit on the deposition substrate leaving the conductive particles in the solution. This variation should be regarded as within the scope of the method described, i.e. selective fractionalization of nano-particles using light to create the selection.

Various additional modifications of this invention will occur to those skilled in the art. All deviations from the specific teachings of this specification that basically rely on the principles and their equivalents through which the art has been advanced are properly considered within the scope of the invention as described and claimed.

## Claims

1. A method for separating conductive particles from less conductive particles comprising the steps of preparing a liquid suspension comprising conductive particles and less conductive particles, contacting a solid deposition surface with the liquid suspension, and passing light into the liquid suspension to illuminate the particles thereby to selectively deposit conductive particles on the deposition surface.

2. The method of claim 1 wherein the conductive particles are harvested by removing them from the deposition surface.

3. The method of claim 1 wherein the deposition surface is transparent to the light and the light passes through the deposition surface to illuminate the particles.

4. The method of claim 3 wherein the particles absorb the light passing through the deposition surface.

5. The method of claim 1 wherein the coating material comprises carbon nanoparticles.

6. The method of claim 5 wherein the coating material comprises carbon nanotubes.

7. The method of claim 1 wherein the liquid suspension is a dispersion of carbon nanotubes in a liquid.

8. The method of claim 7 wherein the liquid is selected from the group consisting essentially of alcohols, ethers, and ketones.

9. The method of claim 8 wherein the liquid is an alkyl alcohol.

10. The method of claim 9 wherein the liquid is ethanol.

11. The method of claim 7 wherein the light is laser light.

12. The method of claim 11 wherein the laser light has a wavelength of approximately 980 nm.

13. The method of claim 1 wherein the deposition surface comprises glass.

14. The method of claim 1 wherein the non-conductive particles are harvested from the solution.

15. A method for separating conductive particles from less conductive particles comprising the steps of preparing a liquid suspension comprising conductive particles and less conductive particles, contacting a solid deposition surface with the liquid suspension, passing light into the liquid suspension to illuminate the particles thereby to selectively deposit non-conductive particles on the deposition surface, separating the liquid suspension and the deposition surface, and drying the deposition surface.

16. The method of claim 15 wherein the non-conductive particles are harvested by removing them from the deposition surface.
